# EUROPEAN PATENT APPLICATION

(11) **EP 1 895 413 A2**
(43) Date of publication of application: **05.03.2008**
(21) Application number: 07015874.6
(22) Date of filing: 13.08.2007
(51) Int. Cl.: G06F 9/52, G06F 13/00, G06F 12/00

(54) **Access monitoring method and device for shared memory**

(30) Priority: 18.08.2006 JP 2006223299
(71) Applicant: FUJITSU LIMITED, Kawasaki-shi, Kanagawa 211-8588 (JP)
(72) Inventor: Urata, Syouichi, Fujitsu Kyushu Network Technologies Ltd., Sawara-ku Fukuoka-shi Fukuoka 814-8588 (JP); Shigaki, Kouki, Fujitsu Kyushu Network Technologies Ltd., Sawara-ku Fukuoka-shi Fukuoka 814-8588 (JP); Tsuiji, Eiichi, c/o Fujitsu Kyushu Network Technologies Ltd., Sawara-ku Fukuoka-shi Fukuoka 814-8588 (JP); Uemura, Kazunori, c/oFujitsu Kyushu Network Technologies Ltd., Sawara-ku Fukuoka-shi Fukuoka 814-8588 (JP); Tamura, Ryouko, c/oFujitsu Kyushu Network Technologies Ltd., Sawara-ku Fukuoka-shi Fukuoka 814-8588 (JP)
(74) Representative: HOFFMANN EITLE

(57) **Abstract**

In an access monitoring method and device for shared memory which can monitor access information from an arbitrary processor to a shared memory regardless of a type of a multi-processor system, a bus interface within a shared memory board receives, from an arbitrary request source processor among a plurality of processors, a request packet in which an identifier of a processor and an acquisition request (or a release request) of an access right to the shared memory are set. The bus interface sets (or resets) the identifier of the request source processor in the shared memory depending on the acquisition request (or the release request) of the access right, generates an answer packet indicating an acquisition (or a release) of the access right corresponding to the setting (or the resetting) of the identifier of the request source processor, and broadcasts the answer packet to all of the processors.

## Description

### Background of the Invention

### Field of the Invention

The present invention relates to an access monitoring method and device for shared memory, and in particular to an access monitoring method and device for shared memory in a multi-processor system where a plurality of processors access a shared memory.

### Description of the Related Art

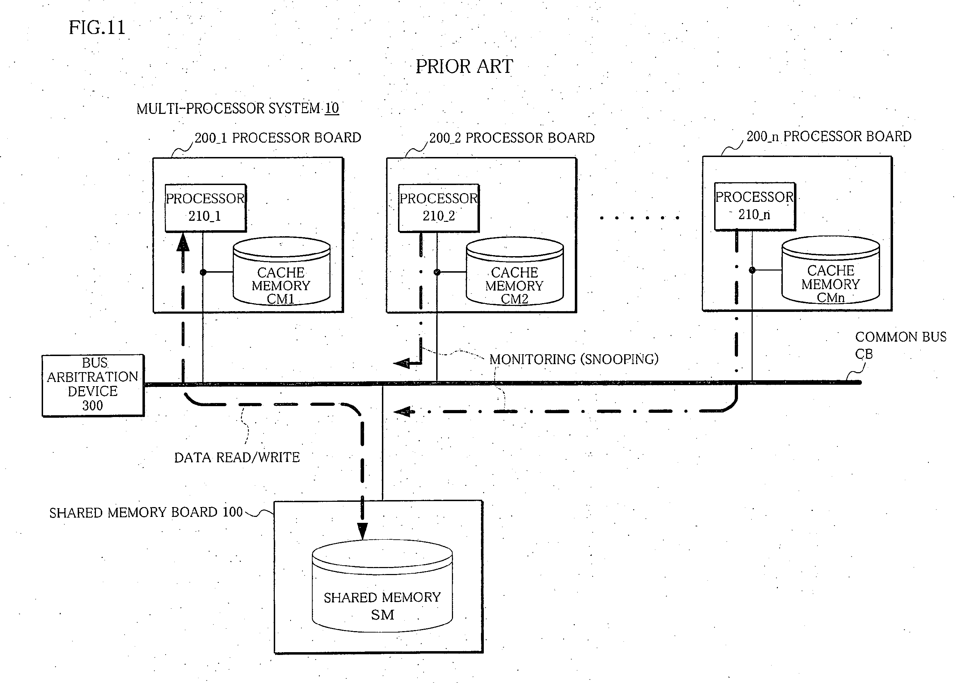

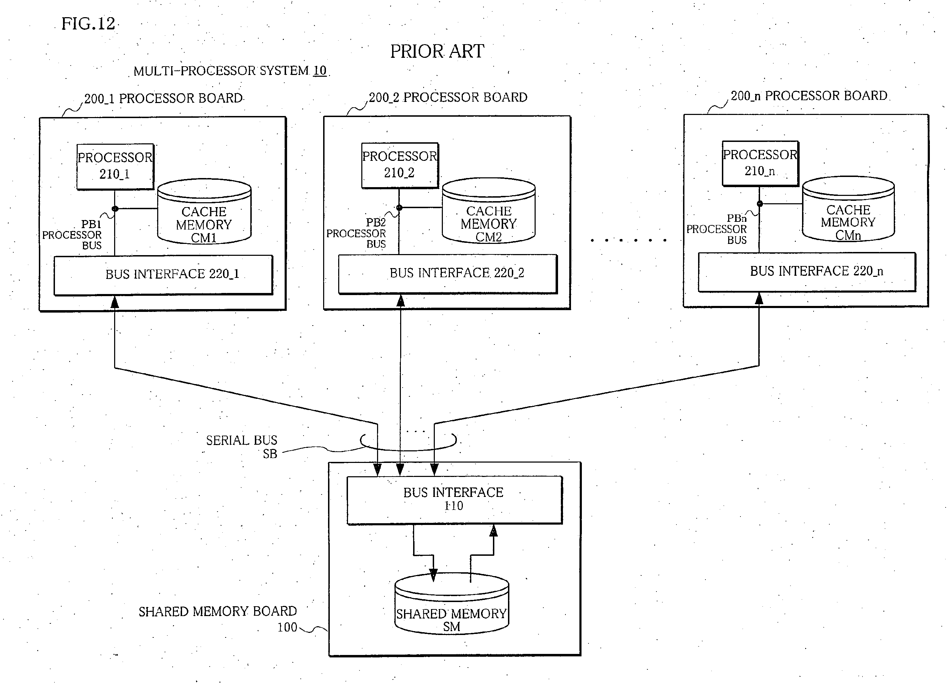

Prior art examples [1] and [2] of an access monitoring technology for shared memory as mentioned above will now be described referring to Figs.11 and 12.

### Prior art example [1] (common bus type): Fig.11

A multi-processor system 10 shown in Fig. 11 is composed of a shared memory board 100 on which a shared memory SM is mounted, processor boards 200_1-200_n (hereinafter, occasionally represented by a reference numeral 200) on which "n" units of processors 210_1-210_n (hereinafter, occasionally represented by a reference numeral 210) connected to the shared memory board 100 through a common bus CB and "n" units of cache memories CM1-CMn (hereinafter, occasionally represented by a reference character CM) are respectively mounted, and a bus arbitration device 300 connected to the common bus CB to arbitrate accesses to the shared memory SM from the processors 210_1-210_n, which is generally called a common bus type multi-processor system.

In the multi-processor system 10, when an arbitrary processor, e.g. the processor 210_1 performs data read or write (access) to the shared memory SM as shown by the dotted lines in Fig.11, the other processors 210_2-210_n respectively monitor (snoop) through the common bus CB access information (namely, information indicating whether or not the arbitrary processor is accessing the shared memory SM) as well as the date read or written, so that the access information and the data read or written are reflected in the cache memories CM2-CMn as shown by the dashed-dotted lines in Fig.11.

Thus, each processor 210 can acquire the latest data of the shared memory SM by having only to access the cache memory CM within its own processor board 200, thereby reducing a processing time required for accessing the shared memory SM.

However, the common bus type multi-processor system has problems described in the following (1)-(4):

(1) While a certain processor is accessing the shared memory, the other processors can not access the shared memory by using the common bus, so that a loss of a shared memory access time occurs in the whole system;

(2) A quality of the common bus deteriorates with the addition of the processor board, which limits the number of processor boards which can be set. Therefore, a large-scale multi-processor system can not be established;

(3) When the common bus stacks due to a failure of a certain processor, the other processors can not access the shared memory until the failure is restored;

(4) Upon the failure occurrence of the above-mentioned (3), it is difficult to specify the failure point.

In order to address these problems, the following prior art example [2] has already been proposed:

### Prior art example [2] (star type): Fig. 12

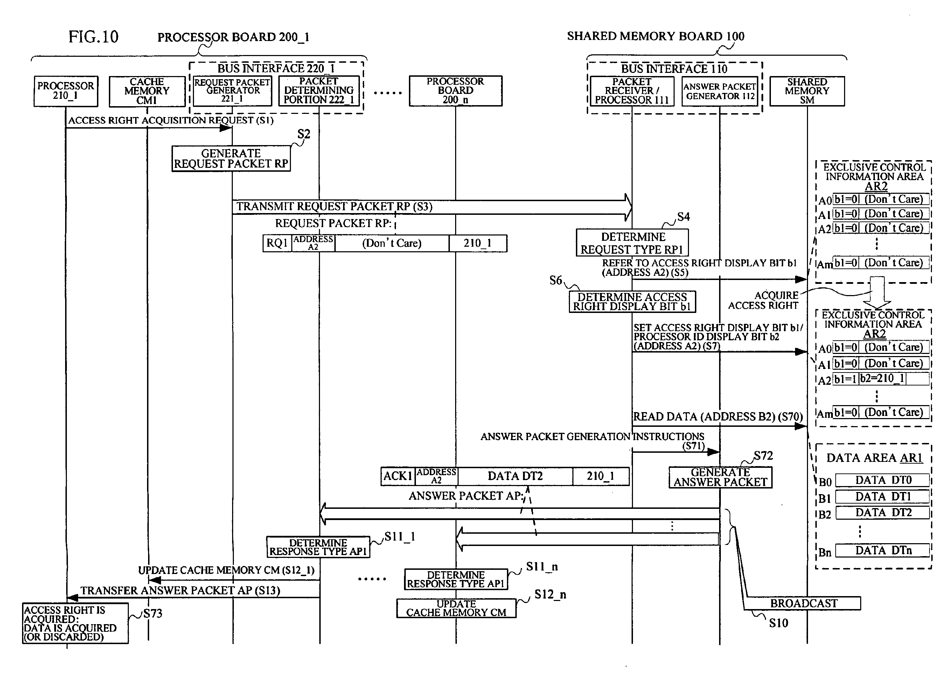

In a multi-processor system 10 shown in Fig. 10, the processor boards 200_1-200_n are respectively connected to the shared memory board 100 one-on-one with "n" sets of serial buses SB, different from the arrangement described in the above-mentioned prior art example [1]. This system is generally called a star type multi-processor system.

Also, in place of the bus arbitration device 300 described in the above-mentioned prior art example [1], the processor boards 200_1-200_n and the shared memory board 100 respectively have bus interfaces 220_1-220_n and 110 controlling the access to the shared memory SM. The bus interfaces 220_1-220_n and 110 are mutually connected, so that the processors 210_1-210_n and the cache memories CM1-CMn are connected to the shared memory SM through processor buses PB1-PBn; as well as the bus interfaces 220_1-220_n and 110.

In the multi-processor system 10, each of the processors 210_1-210n can respectively access the shared memory SM in parallel, so that the data write in the shared memory SM can be performed at an arbitrary timing, and only necessary data can be read from the shared memory SM to be stored in the cache memory CM (see e.g. patent documents 1-3).
[Patent document 1] Japanese Patent Application Laid-open No.58-016362
[Patent document 2] Japanese Patent Application Laid-open No.2000-267815
[Patent document 3] Japanese Patent Application Laid-open No.2000-267816

In a star type multi-processor system like the above-mentioned prior art example [2], while the processors can access the shared memory in parallel, there has been a problem that monitoring the access information to the shared memory of the other processors, which is an advantage of a common bus type multi-processor system like the above-mentioned prior art example [1], can not be performed.

In this case, a delay may occur by having other processors which request an access without recognizing the access to the shared memory by a certain processor wait for the access to the shared memory. Also, a transaction load due to concurrent requests of access to the shared memory from the processors may degrade the throughput of the whole system.

### Summary of the Invention

It is accordingly an object of the present invention to provide an access monitoring method and device for shared memory which can monitor access information to a shared memory from an arbitrary processor regardless of the type of a multi-processor system.

[1] In order to achieve the above-mentioned object, an access monitoring method (or device) for shared memory according to one aspect of the present invention comprises: a first step of (or means) receiving, from an arbitrary request source processor among a plurality of processors, a request packet in which an identifier of the request source processor and an acquisition request or a release request of an access right to a shared memory are set; a second step of (or means) respectively setting or resetting, depending on the acquisition request or the release request of the access right, the identifier of the request source processor in the shared memory; and a third step of (or means) generating an answer packet indicating an acquisition or a release of the access right respectively corresponding to the setting or the resetting of the identifier of the request source processor, and of broadcasting the answer packet to all of the processors.

Namely, on a receiving side (shared memory side) of a request packet, at the second step (or means), when an acquisition request of an access right to a shared memory is set in the request packet having received at the first step (or means)., an identifier of a request source processor set in the request packet is set in the shared memory, thereby having the request source processor acquire the access right to the shared memory.

At the third step (or means), an answer packet indicating the acquisition of the access right is generated and broadcast to all of the processors.

The request packet has only to be transmitted only between the request source processor and the shared memory. Also, the answer packet can be transmitted common to each processor. Therefore, in the star type multi-processor system described in the prior art example [2] as well as the common bus type multi-processor system described in the above-mentioned prior art example [1], it is possible to inform other processors other than the request source processor that any one of the processors has accessed the shared memory.

Also, when a release request of the access right is set in the request packet, the second step (or means) resets the identifier of the request source processor in the shared memory, thereby releasing the access right having been acquired by the request source processor.

At the third step (or means), an answer packet indicating the release of the access, right is generated and broadcast to all of the processors.

Thus, it is possible to have the other processors recognize that none of the processors has accessed the shared memory so that all of the processors can access the shared memory.

[2] Also, in the device of the above-mentioned [1], the shared memory may have a data area for storing data read or written by each of the processors, and an exclusive control information area including an access right display bit which indicates a status of an acquisition or a release of the access right to the data area and an identifier display bit indicating an identifier of the processor, and the second means may include fourth means updating, when the acquisition request is set in the request packet and the access right display bit indicates a released status of the access right, the access right display bit to an acquisition status, and setting the identifier of the request source processor in the identifier display bit, and fifth means updating, when the release request is set in the request packet and the access right display bit and the identifier display bit respectively indicate the acquisition status of the access right and the identifier of the request source processor, the access right display bit to the release status and resetting the identifier of the request source processor set in the identifier display bit.

Namely, it is possible to simply control the acquisition and the release of the access right by dividing the shared memory into a data area and an exclusive control information area.

Also, the fifth means updates a access right display bit to a release status only when an identifier of a processor set in an identifier display bit coincides with the identifier of the request source processor, so that the other processors other than the request source processor can not intentionally release the access right.

[3] Also, in the above-mentioned [2], the data area may be divided into data blocks per predetermined address range and the exclusive control information may be provided corresponding to each of the data blocks, the request packet may further include address information indicating to which data block the acquisition or the release of the access right is requested, and the fourth means or the fifth means may respectively update the access right display bit to the acquisition or release status to a data block indicated in the address information, and set the identifier of the request source processor in the identifier display bit or reset the identifier of the request source processor set in the identifier display bit.

Namely, even when the shared memory is divided so as to be effectively used, it is possible to acquire or release the access right of the arbitrary processor per data block, so that it is possible to have each processor monitor access information per data block.

[4] Also, in the above-mentioned [3], each of the data blocks may be divided per a single address, the fourth means may include means reading data stored in a data block of an address indicated in the address information and instructing the third means to set the read data in the answer packet when updating the access right display bit to the acquisition status and setting the identifier of the request source processor in the identifier display bit, and the third means may include means setting the read data in the answer packet generated.

Namely, each data block is divided per a single address, so that it is possible to uniquely specify data which should be read when the processor acquires the access right. Therefore, the answer packet in which the read data is set can be transmitted to the processor.

Thus, the processor having acquired the access right can acquire desired data without performing the data read, so that it is possible to reduce a transaction load according to the access to the shared memory.

[5] Also, an access monitoring method (or device) for shared memory according to one aspect of the present invention in order to achieve the above-mentioned object comprises: a first means receiving, in response to a request packet requesting an acquisition or a release of an access right to a shared memory from an arbitrary request source processor among a plurality of processors, an answer packet which is broadcast to all of the processors and indicates an acquisition or a release of the access right respectively corresponding to setting or resetting of an identifier of the request source processor in the shared memory; and a second means determining whether the answer packet indicates the acquisition or the release of the access right.

Namely, on a transmitting side (processor side) of the request packet, at the first step (or means), the answer packet described in the above-mentioned [1] is received from the shared memory. It is to be noted that the answer packet is received in both cases where the processor itself has transmitted the request packet to the shared memory (namely, the processor itself is the request source processor), and when the request packet has been transmitted from another processor.

Thus, at the second step (or means), it can be recognized without access to the shared memory that any one of the processors has accessed the shared memory or that none of the processors has accessed the shared memory.

[6] Also, in the device of the above-mentioned [5], the shared memory may have a data area for storing data read or written by each of the processors, and an exclusive control information area including an access right display bit which indicates a status of a acquisition or release of the access right to the data area and an identifier display bit indicating an identifier of the processor, and the second means may include third means updating to an acquisition status an access right display bit in a cache memory which includes an area identical to the exclusive control information area when determining that the answer packet indicates the acquisition of the access right, and fourth means updating the access right display bit in the cache memory to a release status when determining that the answer packet indicates the release of the access right.

[7] Also, in the above-mentioned [6], the data area may be divided into data blocks per predetermined address range and the exclusive control information of both the shared memory and the cache memory may be respectively provided corresponding to each of the data blocks, the answer packet may further include address information indicating to which data block the access right is acquired or released, and the third means or the fourth means may respectively update to the acquisition or release status the access right display bit in the cache memory corresponding to a data block indicated in the address information.

Namely, even when various divisions are performed to the shared memory as the above-mentioned [6] and [7], each of the processors respectively and sequentially records the acquisition or release of the access right in a cache memory including an area identical to the exclusive control information area in the shared memory, thereby enabling the identical and latest access information to be constantly shared. Therefore, it is possible to prevent the processor from unnecessarily waiting for the access to the shared memory upon the request thereof and a plurality of processors from concurrently requesting the access.

[8] Also, in the above-mentioned [6] or [7], the answer packet may further include an identifier of the request source processor, the exclusive control information of the cache memory may include an identifier display bit indicating an identifier of the processor, and the third means or the fourth means may respectively record the identifier of the request source processor in the identifier display bit or reset the identifier of the request source processor recorded in the identifier display bit when the access right display bit in the cache memory is updated to the acquisition status or the released status.

Thus, when the identifier of the request source processor is included in the answer packet, each processor records the identifier of the processor which acquires or releases the access right in the cache memory. Therefore, even when a certain processor in which a failure has occurred keeps the access right acquired, it is possible to easily specify the processor in which the failure has occurred by referring to the cache memory, and to rapidly perform recovery operations.

According to the present invention, particularly in the star type multi-processor system, it is possible to monitor the access information to the shared memory from the arbitrary processor, thereby enabling the processing time required for accessing the shared memory to be reduced, and enabling throughputs of each processor and the whole system to be upgraded.

Since it is made possible to simply perform monitoring of the access information to the shared memory and control of the access right, the present invention can be easily applied to the existing system.

### Brief Description of the Drawings

The above and other objects and advantages of the invention will be apparent upon consideration of the following detailed description, taken in conjunction with the accompanying drawings, in which the reference numerals refer to like parts throughout and in which:
Fig.1 is a block diagram showing an arrangement of a multi-processor system to which an access monitoring method and device for shared memory according to the present invention are applied;
Figs.2A and 2B are block diagrams showing an arrangement (1) of a shared memory and a cache memory used for the present invention;
Fig.3 is a sequence diagram showing an access right acquisition operation example (1) of the present invention;
Figs.4A and 4B are diagrams showing a format example of a request packet used for the present invention;
Figs.5A and 5B are diagrams showing a format example of an answer packet used for the present invention;
Fig.6 is a sequence diagram showing an access right release operation example of the present invention;
Fig.7 is a sequence diagram showing a data read operation example of the present invention;
Fig.8 is a sequence diagram showing a data write operation example of the present invention;
Fig.9 is a block diagram showing an arrangement (2) of a shared memory used for the present invention;
Fig.10 is a sequence diagram showing an access right acquisition operation example (2) of the present invention;
Fig.11 is a block diagram showing a prior art example [1] of a multi-processor system; and
Fig.12 is a block diagram showing a prior art example [2] of a multi-processor system.

### Description of the Embodiments

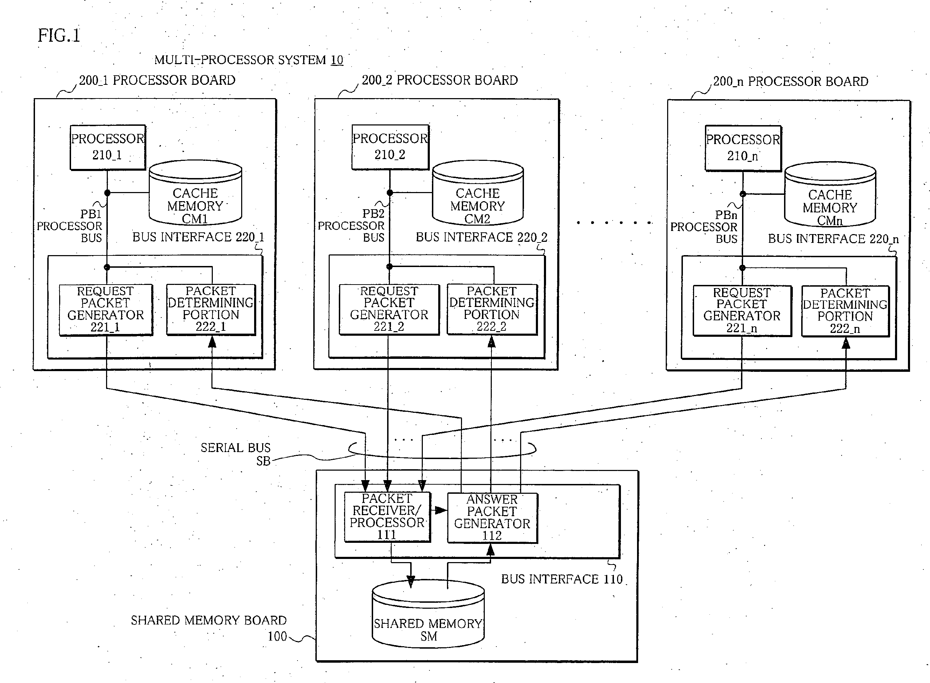

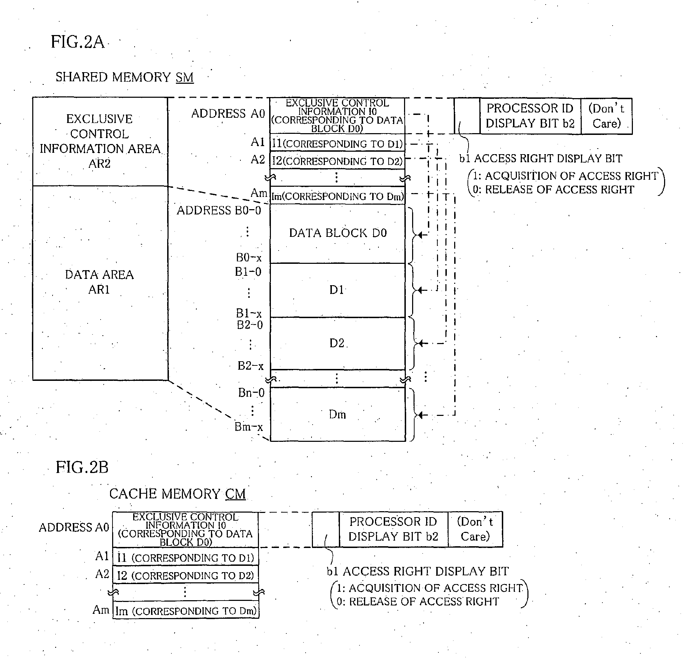

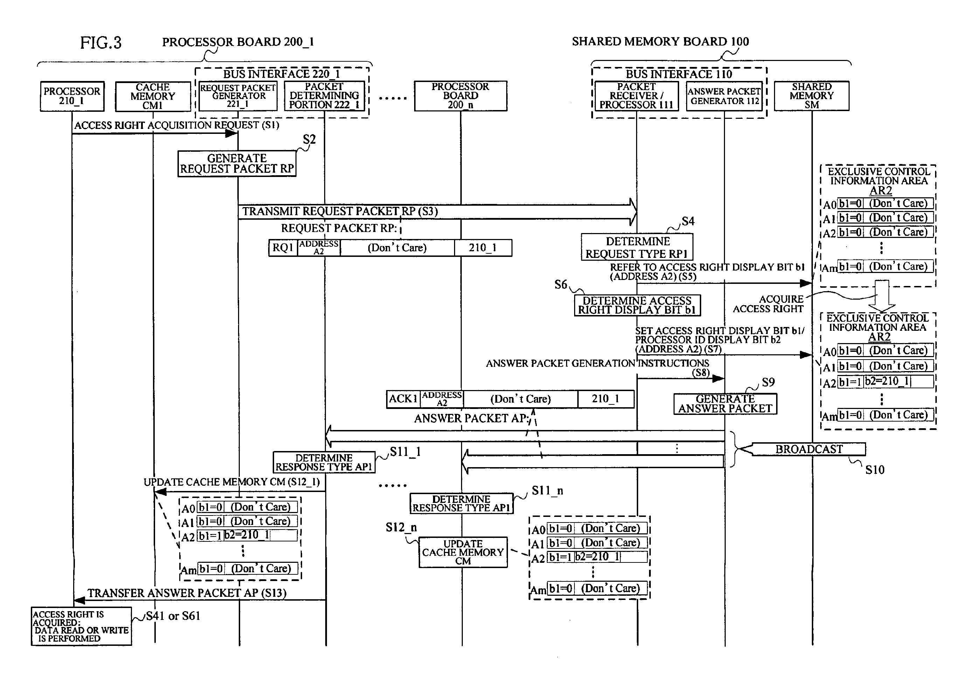

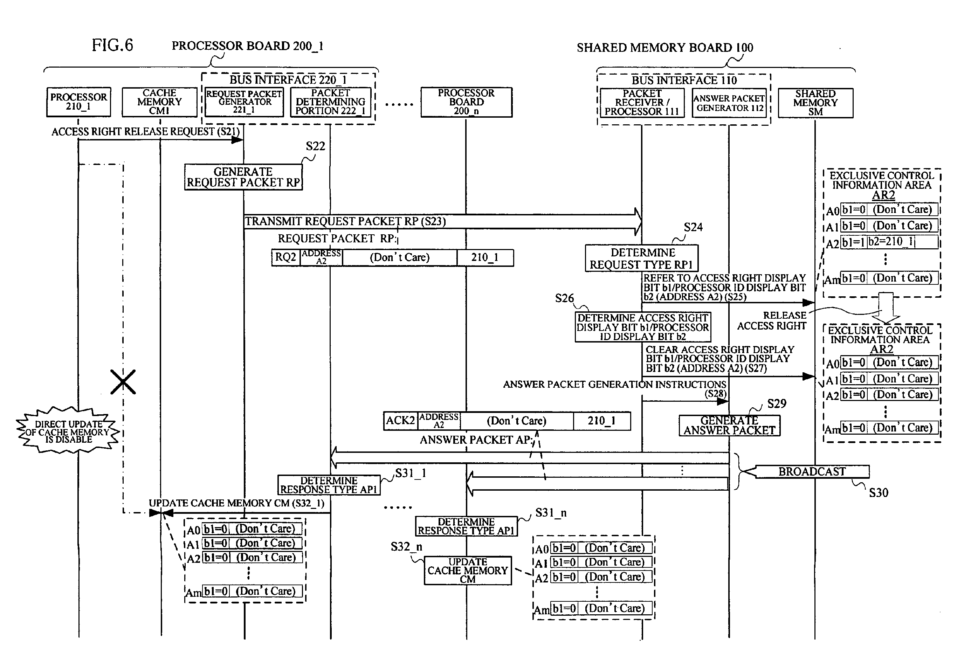

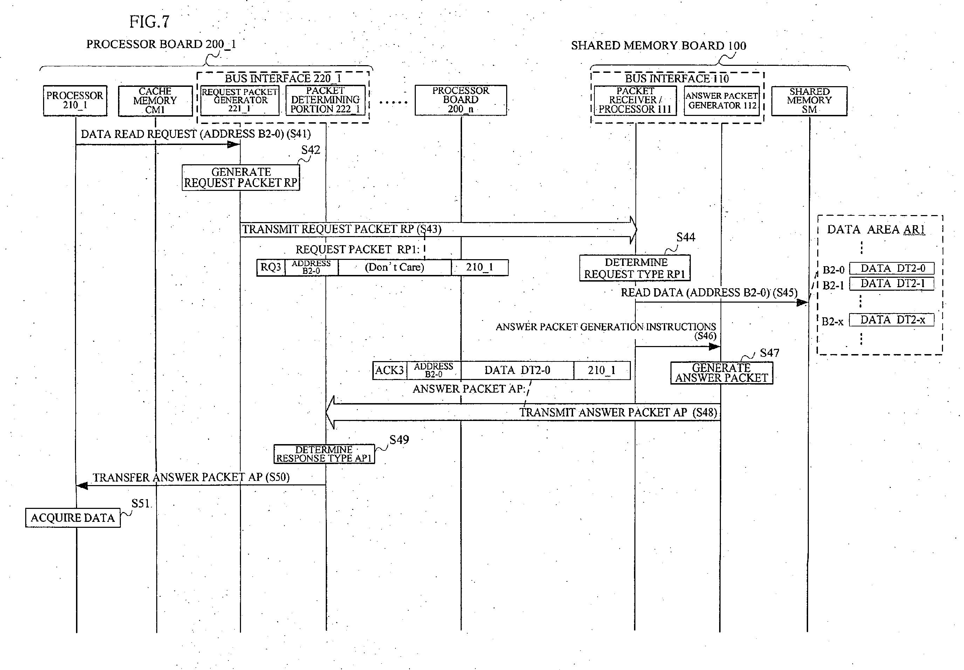

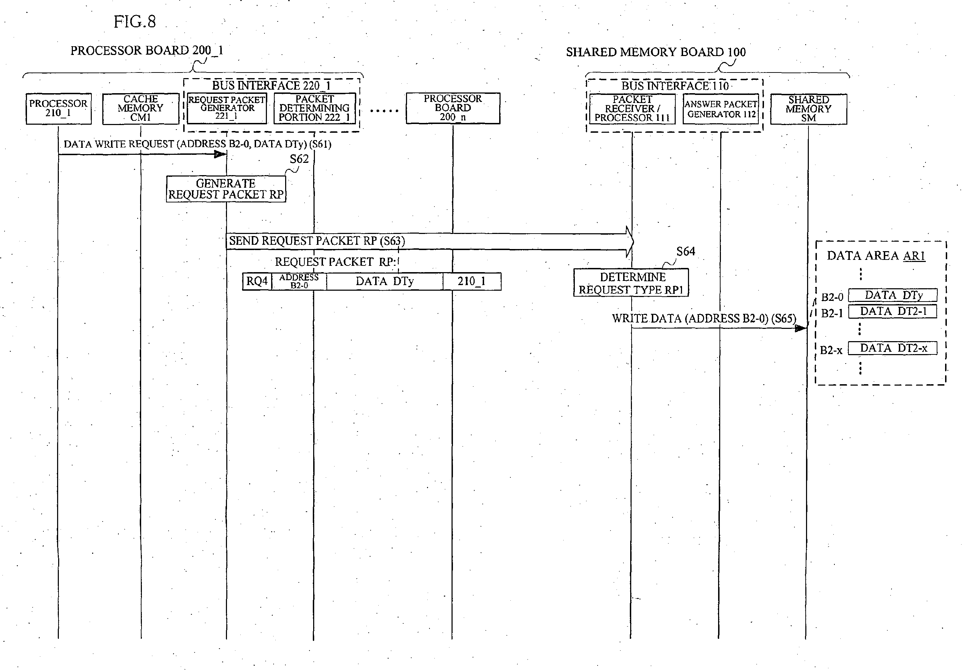

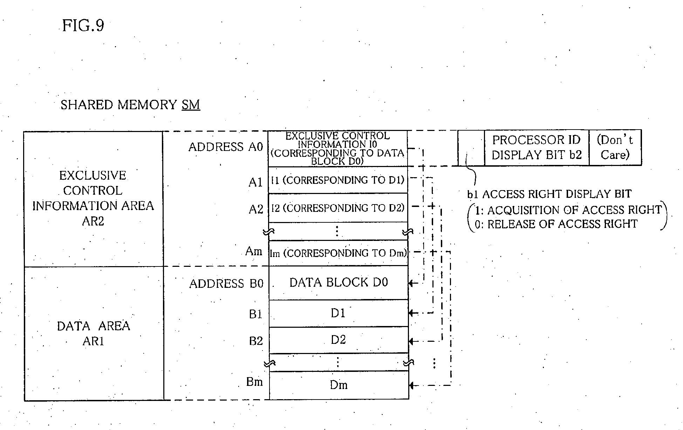

Embodiment of the access monitoring method for shared memory and the device using the method according to the present invention will now be described referring to Figs. 1, 2A, 2B, 3, 4A, 4B, 5A, 5B, and 6-10 in the following order:
I. Arrangement: Figs. 1, 2A, and 2B
   I.1. Overall Arrangement: Fig.1
   1.2. Arrangement (1) of shared memory and cache memory: Figs.2A and 2B
II. Operation example: Figs.3, 4A, 4B, 5A, 5B, and 6-10
   II.1. Operation example (1): Figs.3, 4A, 4B, 5A, 5B, and 6-8
      II.1.A. Access right acquisition operation example (1): Figs.3, 4A, 4B, 5A, and 5B
      II.1.B. Access right release operation example: Fig.6
      II.1.C. Data read operation example: Fig.7
      II.1.D. Data write operation example: Fig.8
   II.2. Operation example (2): Figs.9 and 10
      II.2.A. Arrangement (2) of shared memory: Fig.9
      II.2.B. Access right acquisition operation example (2): Fig.10

### I. Arrangement: Figs. 1, 2A, and 2B

### 1.1. Overall Arrangement: Fig. 1

A multi-processor system 10 shown in Fig. 1 is a system where the access monitoring method and device for shared memory according to the present invention are applied to the prior art star type multi-processor system shown in Fig.12.

In the multi-processor system 10, the bus interface 110 within the shared memory board 100 has, in addition to the arrangement shown in Fig.12, a packet receiver/processor 111 receiving a request packet which requests an acquisition or a release of an access right to the shared memory SM from an arbitrary request source processor among the processors 210_1-210_n, acquiring or releasing the access right of the request source processor, and producing generation instructions of an answer packet indicating the acquisition or release of the access right, and a answer packet generator 112 generating the answer packet upon receiving the answer packet generation instructions and broadcasting the answer packet to all of the processors 210_1-210_n.

Also, the bus interface 220_1-220_n within the processor boards 200_1-200_n respectively have request packet generators 221_1-221_n (hereinafter, occasionally represented by a reference numeral 221) generating the request packet to be transmitted to the shared memory board 100 side, and packet determining portions 222_1.222_n (hereinafter, occasionally represented by a reference numeral 222) receiving the answer packet to be determined.

It is to be noted that while the bus interface 110 is configured by being divided into the packet receiver/processor 111 and the answer packet generator 112, both of them may be configured as a single function block. In this case, the following description can be similarly applied.

### I:2. Arrangement (1) of shared memory and cache memory: Figs.2A and 2B

The shared memory SM is divided, as shown in Fig.2A, into a data area AR1 storing data read or written by the processor 210 and an area AR2 of exclusive control information to the data area AR1. The data area AR1 is divided per range of addresses "0"-"x" and has "m+1" units of data blocks D0.Dm whose addresses are "B0-0"-"B0-x", "B1-0"-"B1-x", "B2-0"-"B2-x", ···, and "Bm-0"-Bm-x". In the exclusive control information area AR2, exclusive control information IO-Im whose addresses are A0, A1, A2, ···, and Am are provided respectively corresponding to the data blocks D0-Dm.

Also, the exclusive control information includes an access right display bit b1 indicating a status of an acquisition "1" (acquisition completion) or a release "0" (release completion) of the access right to corresponding data block, and a display bit b2 displaying an ID (identifier) of a processor having acquired the access right.

Also, the cache memory CM includes, as shown in Fig.2B, an area identical to the exclusive control information area AR2 of the shared memory SM.

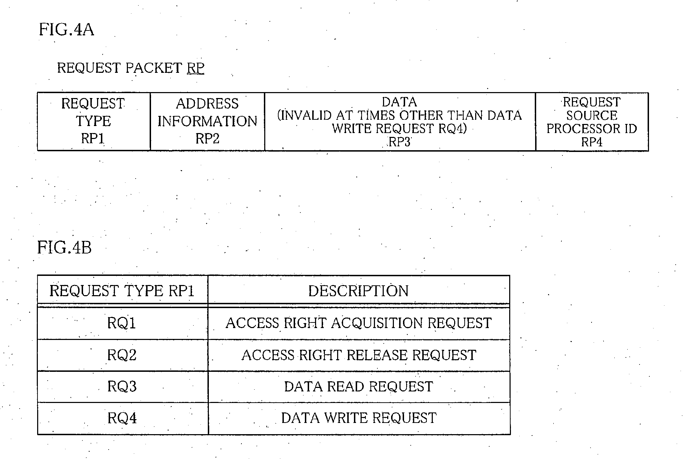

### II. Operation example: Figs.3, 4A 4B 5A 5B, and 6-10

Hereinafter, an operation of the multi-processor system 10 shown in Fig.1 will be described. Firstly, an operation example (1) where the shared memory SM and the cache memory CM have the same arrangement as shown in Figs.2A and 2B will be described referring to Figs.3, 4A, 4B, 5A, 5B, and 6-8. Then, an operation example (2) where the arrangement of the shared memory SM has an arrangement (Fig.9) different from Fig.2A will be described referring to Figs.9 and 10.

### II.1. Operation example (1): Figs.3, 4A 4B, 5A 5B and 6-8

Hereinafter, the operation of the multi-processor system 10 will be described in the order of an access right acquisition operation example, an access right release operation example, a data read operation example, and a data write operation example.

Also, in the following operation examples, a case where the processor 210_1 among the processors 210_1-210_n accesses e.g. the data block D2 in the shared memory SM shown in Fig.2A will be described.

It is to be noted that the following description is similarly applied to cases where other processors 210_2-210_n other than the processor 210_1 access the shared memory and where the data blocks D1, and D3-Dm other than the data block D2 are accessed.

### II.1.A.. Access right acquisition operation example (1): Figs.3, 4A 4B, 5A, and 5B

Firstly, the processor 210_1 which requests the access to the data block D2 provides, as shown in Fig.3, an access right acquisition request to the request packet generator 221_1 forming the bus interface 220_1 (at step S1).

The request packet generator 221_1 having received the access right acquisition request generates a request packet RP as described below (at step S2).

Namely, the request packet generator 221_1 sets an access right acquisition request RQ1 shown in Fig.4B, the address A2 of the exclusive control information 12 corresponding to the data block D2, and "210_1", respectively to a request type RP1, address information RP2, and a request source processor ID RP4 in the request packet RP shown in Fig.4A.

It, is to be noted that while nothing is set to data RP3 in the request packet RP and the data RP3 is empty except in the data write (namely, when a data write request RQ4 is set to the request type RP1), data is set to the data RP3 in the data write operation example as will be described later.

The request packet generator 221_1 transmits the request packet RP generated to the bus interface 110 within the shared memory board 100 (at step S3).

The packet receiver/processor 111 forming the interface 110 and having received the request packet RP extracts the request type RP1 from the request packet RP for the determination (at step S4). As a result, when determining that the access right acquisition request RQ1 is set in the request type RP1, the packet receiver/processor 111 refers to the access right display bit b1 in the exclusive control information 12 designated by the address A2 set in the address information RP2 (at step S5).

The packet receiver/processor 111 determines whether or not the access right display bit b1 indicates the access right release status "0" (at step S6). As a result, when determining that the access right display bit b1 indicates the access right release status "0", the packet receiver/processor 111 updates the access right display bit b1 to the access right acquisition status "1", and sets the processor ID display bit b2 with "210_1" (at step S7).

Thus, the packet receiver/processor 111 can have the processor 210_1 acquire the access right to the data block D2.

The packet receiver/processor 111 provides generation instructions of an answer packet AP indicating the acquisition of the access right to the data block D2 by the processor 210_1 to the answer packet generator 112 (at step S8). The answer packet generator 112 having received the instructions generates the answer packet AP as described below (at step S9).

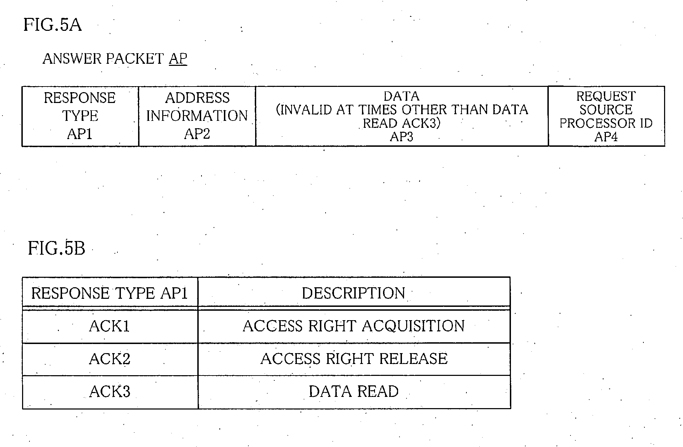

Namely, the answer packet generator 112 sets an access right acquisition ACK1 shown in Fig.5B, the address A2, and "210_1", respectively to a response type AP1, address information AP2, and a request source processor ID AP4 in the answer packet AP shown in Fig.5A.

It is to be noted that while nothing is set to data AP3 in the answer packet AP and the data AP3 is empty except in the data read (namely, when a data read ACK3 is set to the response type AP1), data is set to the data AP3 in the data read operation example and the operation example (2) as will be described later.

The answer packet generator 112 broadcasts the answer packet AP generated to the bus interfaces 220_1-220_n within all of the processor boards 200_1-200_n (at step S10).

The packet determining portions 222_1-222_n forming the bus interfaces 220_1-220_n and having received the answer packet AP broadcast respectively extract the response type AP1 from the answer packet AP for the determination (at steps S11_1-S11_n). As a result, when determining that the access right acquisition ACK1 is set in the response type AP1, the, packet determining portions 222-1-222-n update to the access right acquisition status "1" the access right display bit b1 of the exclusive control information 12 in the cache memories CM1-CMn designated by the address A2 set in the address information AP2, and set the processor ID display bit b2 with "210_1" set in the request source processor ID AP4 (at steps S12_1-S12_n).

Each of the packet determining portions 222_1-222_n determines whether or not the processor ID set in the request source processor ID AP4 coincides with its own processor ID. In this example, only the packet determining portion 222_1 determines that both processor IDs are coincident, and transfers the answer packet AP to the processor 210_1 (at step S13).

The processor 210_1 having received the answer packet AP recognizes that the access right to the data block D2 is acquired, and performs the data read or write as will be described later referring to Fig.7 or 8 (at step S41 or S61).

### II.1:B. Access right release operation example: Fig.6

The processor 210_1 having completed the data read or write provides, as shown in Fig.6, an access right release request to the request packet generator 221_1 in order to release the access right to the data block D2 (at step S21).

The request packet generator 221_1 having received the request generates the request packet RP as described below (at step S22).

Namely, the request packet generator 221_1 sets an access right release request RQ2 shown in Fig.4B, the address A2 of the exclusive control information 12 corresponding to the data block D2, and "210_1", respectively to the request type RP1, the address information RP2, and the request source processor ID RP4 in the request packet RP.

The request packet generator 221_1 transmits the request packet RP generated to the packet receiver/processor 111 (at step S23).

The packet receiver/processor 111 having received the request packet RP extracts the request type RP1 from the request packet RP for the determination (at step S24). As a result, when determining that the access right release request RQ2 is set in the request type RP1, the packet receiver/processor 111 refers to the access right display bit b1 and the processor ID display bit b2 in the exclusive control information 12 designated by the address A2 set in the address information RP2 (at step S25).

The packet receiver/processor 111 determines whether or not the access right display bit b1 and the processor ID display bit b2 respectively indicate the access right acquisition status "1" and "210_1" having been set in the request source processor ID RP4 (at step S26). As a result, when determining that the access right display bit b1 and the processor ID display bit b2 respectively indicate the access right acquisition status "1" and "210_1", the packet receiver/processor 111 updates the access right display bit b1 to the access right release status "0", and deletes "210_1" having been set in the processor ID display bit b2 (at step S27).

Thus, the packet receiver/processor 111 can release the access right to the data block D2 having been acquired by the processor 210_1. The packet receiver/processor 111 provides generation instructions of the answer packet AP indicating the release of the access right to the data block D2 by the processor 210_1 to the answer packet generator 112 (at step S28).

The answer packet generator 112 having received the instructions generates the answer packet AP as described below (at step S29).

Namely, the answer packet generator 112 sets an access right release ACK2 shown in Fig.5B, the address A2, and "210_1", respectively to the response type AP1, the address information AP2, and the request source processor ID AP4 in the answer packet AP.

The answer packet generator 112 broadcasts the answer packet AP generated to all of the packet determining portions 222_1-222_n (at step S30):

The packet determining portions 222_1-222_n having received the answer packet AP broadcast respectively extract the response type AP1 from the answer packet AP for the determination (at steps S31_1-S31_n). As a result, when determining that the access right release ACK2 is set in the response type AP1, the packet determining portions 222_1-222_n update to the access right release status "0" the access right display bit b1 of the exclusive control information 12 in the cache memories CM1-CMn designated by the address A2 set in the address information AP2, and delete "210_1" set in the processor ID display bit b2 (at steps S32_1-S32_n).

It is to be noted that the processor 210_1 having requested the release of the access right to the data block D2 can directly update the cache memory CM1 upon the request. However, when the cache memory CM1 is directly updated, the content of the cache memory CM1 may not coincide with the contents of the cache memories CM2-CMn within the other processors 210_2-210_n and the shared memory SM due to influences of loss or the like of the request packet RP or the answer packet AP due to a transmission failure of the serial bus SB. Therefore, the processor 210_1 (packet determining portion 222_1) updates the cache memory CM1 after the determination of the above-mentioned step S31_1.

### II.1.C. Data read operation example: Fig.7

The processor 210_1 having acquired the access right to the data block D2 provides, as shown in Fig.7, a data read request from a desired address in the data block D2, e.g. the address "B2-0" to the request packet generator 221_1 (at step S41).

The request packet generator 221_1 having received the data read request generates the request packet RP as described below (at step S42).

Namely, the request packet generator 221_1 sets a data read request RQ3 shown in Fig.4B, the address "B2-0", and "210_1", respectively to the request type RP1, the address information RP2, and the request source processor ID RP4 in the request packet RP.

The request packet generator 221_1 transmits the request packet RP generated to the packet receiver/processor 111 (at step S43).

The packet receiver/processor 111 having received the request packet RP extracts the request type RP1 from the request packet RP for the determination (at step S44). As a result, when determining that the data read request RQ3 is set in the request type RP1, the packet receiver/processor 111 reads data "DT2-0" from an area designated by the address "B2-0" set in the address information RP2 (at step S45).

The packet receiver/processor 111 provides generation instructions of the answer packet AP set with the data "DT2-0" read to the answer packet generator 112 (at step S46).

The answer packet generator 112 having received the instructions generates the answer packet AP as described below (at step S47).

Namely, the answer packet generator 112 sets a data read ACK3 shown in Fig. 5B, the address "B2-0", the data "DT2-0", and "210_1", respectively to the response, type AP1, the address information AP2, the data AP3, and the request source processor ID AP4 in the answer packet AP.

The answer packet generator 112 transmits the answer packet AP generated only to the packet determining portion 222_1 (at step S48).

The packet determining portion 222_1 having received the answer packet AP extracts the response type AP1 from the answer packet AP for the determination (at step S49). When determining that the data read ACK3 is set in the response type AP1, the packet determining portion 222_1 transfers the answer packet AP to the processor 210_1 (at step S50).

The processor 210_1 having received the answer packet AP acquires the data "DT2-0" from the data AP3 in the answer packet AP (at step S51).

### II.1.D. Data write operation example: Fig.8

The processor 210_1 having acquired the access right to the data block D2 provides, as shown in Fig.8, a data write request of desired data DTy to a desired address in the data block D2, e.g. the address "B2-0" to the request packet generator 221_1 (at step S61).

The request packet generator 221_1 having received the data write request generates the request packet RP as described below (at step S62).

Namely, the request packet generator 221_1 sets a data write request RQ4 shown in Fig.4B, the address "B2-0", the data DTy, and "210_1", respectively to the request type RP1, the address information RP2, the data RP3, and the request source processor ID RP4 in the request packet RP.

The request packet generator 221_1 transmits the request packet RP generated to the packet receiver/processor 111 (at step S63).

The packet receiver/processor 111 having received the request packet RP extracts the request type RP1 from the request packet RP for the determination (at step 864). As a result, when determining that the data write request RQ4 is set in the request type RP1, the packet receiver/processor 111 writes in an area designated by the address "B2-0" set in the address information RP2 the data DTy set in the data RP3 in the request packet RP (at step S65)..

It is to be noted that the answer packet AP is not transmitted/received between the shared memory board 100 and the processor board 200 upon the data read, and the processor 210 regards that the execution of the data write is completed when performing the data write request indicated at the above-mentioned step S61.

### II.2. Operation example (2): Figs. 9 and 10

Hereinafter, an access right acquisition operation example of the multi-processor system 10 where the shared memory SM has an arrangement shown in Fig.9 will be described referring to Fig.10. It is to be noted that since the access right release operation example, the data read operation example, and the data write operation example are the same as those in the above-mentioned operation example (I), the description thereof will be omitted.

### II.2.A. Arrangement (2) of shared memory: Fig.9

A shared memory SM shown in Fig.9 is different from the arrangement (1) of the shared memory shown in Fig.2A in that the data blocks D0-Dm are respectively divided according to addresses B0, B1, B2, B2; ···, and Bm.

Also, each of the exclusive control information I0-Im is provided, in the same way as the above-mentioned arrangement (1) of the shared memory, corresponding to each of the data blocks D0-Dm, and includes the access right display bit b1 and the processor ID display bit b2.

### IL2.B. Access right acquisition operation example (2): Fig. 10

The access right acquisition operation example shown in Fig.10 is different from the access right acquisition operation example (1) shown in Fig.3 only in processes of steps S70-573.

Namely, at step S7, the packet receiver/processor 111 having had the processor 210_1, acquire the access right to the data block D2 reads data DT2 from the data block D2 corresponding to the exclusive control information I2 designated by the address A2 set in the address information RP2 in the request packet RP (at step S70).

The packet receiver/processor 111 provides instructions for setting the data DT2 read with the acquisition of the access right to the answer packet AP to the answer packet generator 112 (at step S71).

The answer packet generator 112 having received the instructions sets, in the same way as the above-mentioned access right acquisition operation example (1), to the response type AP1, the address information AP2, and the request source processor ID AP4 in the answer packet AP the access right acquisition ACK1, the address A2, and "210_1" respectively, and sets the data DT2 to the data AP3 which is not used in the above-mentioned access right acquisition operation example (1) (at step S72).

Thus, the answer packet in which the data DT2 is set is to be broadcast to all of the packet determining portions 222_1-222_n.

At step S13, the processor 210_1 to which the answer packet AP has been transferred acquires the data DT2 from the data AP3 in the answer packet AP (at step S73).

Thus, the processor 210_1 can acquire the data DT2 stored in the data block D2 without performing the data read request indicated at the step 41 of Fig.7 by concurrently performing the access right acquisition and the data read. It is to be noted that when performing the data write in the data block D2, the processor 210_1 has only to discard the data DT2 acquired and to perform a write request of desired data in the same way as the step S61 of Fig.8:

It is to be noted that the present invention is not limited by the above-mentioned embodiments, and it is obvious that various modifications may be made by one skilled in the art based on the recitation of the claims.

## Claims

1. An access monitoring method for shared memory comprising:
a first step of receiving, from an arbitrary request source processor among a plurality of processors, a request packet in which an identifier of the request source processor and an acquisition request or a release request of an access right to a shared memory are set;
a second step of respectively setting or resetting, depending on the acquisition request or the release request of the access right, the identifier of the request source processor in the shared memory; and
a third step of generating an answer packet indicating an acquisition or a release of the access right respectively corresponding to the setting or the resetting of the identifier of the request source processor, and of broadcasting the answer packet to all of the processors.

2. An access monitoring method for shared memory comprising:
a first step of receiving, in response to a request packet requesting an acquisition or a release of an access right to a shared memory from an arbitrary request source processor among a plurality of processors, an answer packet which is broadcast to all of the processors and indicates an acquisition or a release of the access right respectively corresponding to setting or resetting of an identifier of the request source processor in the shared memory; and
a second step of determining whether the answer packet indicates the acquisition or the release of the access right.

3. An access monitoring device for shared memory comprising:
a first means receiving, from an arbitrary request source processor among a plurality of processors, a request packet in which an identifier of the request source processor and an acquisition request or a release request of an access right to a shared memory are set;
a second means respectively setting or resetting, depending on the acquisition request or the release request of the access right, the identifier of the request source processor in the shared memory; and
a third means generating an answer packet indicating an acquisition or a release of the access right respectively corresponding to the setting or the resetting of the identifier of the request source processor, and broadcasting the answer packet to all of the processors.

4. The access monitoring device for shared memory as claimed in claim 3, wherein the shared memory has a data area for storing data read or written by each of the processors, and an exclusive control information area including an access right display bit which indicates a status of an acquisition or a release of the access right to the data area and an identifier display bit indicating an identifier of the processor, and
the second means includes fourth means updating, when the acquisition request is set in the request packet and the access right display bit indicates a released status of the access right, the access right display bit to an acquisition status, and setting the identifier of the request source processor in the identifier display bit, and fifth means updating, when the release request is set in the request packet and the access right display bit and the identifier display bit respectively indicate the acquisition status of the access right and the identifier of the request source processor, the access right display bit to the release status and resetting the identifier of the request source processor set in the identifier display bit.

5. The access monitoring device for shared memory as claimed in claim 4, wherein the data area is divided into data blocks per predetermined address range and the exclusive control information is provided corresponding to each of the data blocks,
the request packet further includes address information indicating to which data block the acquisition or the release of the access right is requested, and
the fourth means or the fifth means respectively updates the access right display bit to the acquisition or release status to a data block indicated in the address information, and setting the identifier of the request source processor in the identifier display bit or resetting the identifier of the request source processor set in the identifier display bit.

6. The access monitoring device for shared memory as claimed in claim 5, wherein each of the data blocks is divided per a single address,
the fourth means includes means reading data stored in a data block of an address indicated in the address information and instructing the third means to set the read data in the answer packet when updating the access right display bit to the acquisition status and setting the identifier of the request source processor in the identifier display bit, and
the third means includes means setting the read data in the answer packet generated.

7. An access monitoring device for shared memory comprising:
a first means receiving, in response to a request packet requesting an acquisition or a release of an access right to a shared memory from an arbitrary request source processor among a plurality of processors, an answer packet which is broadcast to all of the processors and indicates an acquisition or a release of the access right respectively corresponding to setting or resetting of an identifier of the request source processor in the shared memory; and
a second means determining whether the answer packet indicates the acquisition or the release of the access right.

8. The access monitoring device for shared memory as claimed in claim 7, wherein the shared memory has a data area for storing data read or written by each of the processors, and an exclusive control information area including an access right display bit which indicates a status of a acquisition or release of the access right to the data area and an identifier display bit indicating an identifier of the processor, arid
the second means includes third means updating to an acquisition status an access right display bit in a cache memory which includes an area identical to the exclusive control information area when determining that the answer packet indicates the acquisition of the access right, and fourth means updating the access right display bit in the cache memory to a release status when determining that the answer packet indicates the release of the access right.

9. The access monitoring device for shared memory as claimed in claim 8, wherein the data area is divided into data blocks per predetermined address range and the exclusive control information of both the shared memory and the cache memory is respectively provided corresponding to each of the data blocks,
the answer packet further including address information indicating to which data block the access right is acquired or released, and
the third means or the fourth means respectively updates to the acquisition or release status the access right display bit in the cache memory corresponding to a data block indicated in the address information.

10. The access monitoring device for shared memory as claimed in claim 8 or 9, wherein the answer packet further includes an identifier of the request source processor,
the exclusive control information of the cache memory includes an identifier display bit indicating an identifier of the processor, and
the third means or the fourth means respectively records the identifier of the request source processor in the identifier display bit or resets the identifier of the request source processor recorded in the identifier display when the access right display bit in the cache memory is updated to the acquisition status or the released status.
